# EUROPEAN PATENT APPLICATION

(11) **EP 2 083 534 A1**
(43) Date of publication of application: **29.07.2009**
(21) Application number: 08290066.3
(22) Date of filing: 25.01.2008
(51) Int. Cl.: H04L 12/18

(54) **Transmission of multicast and broadcast content and method thereof**

(71) Applicant: Alcatel Lucent, 75008 Paris (FR)
(72) Inventor: Alberto Conte, 94230 Cachan (FR); Alexis Germaneau, 92000 Nanterre (FR); Balageas , Carine, 91190 Gif sur Yvette (FR)
(74) Representative: Richardt, Markus Albert

(57) **Abstract**

The present invention provides a method of transmitting multicast and broadcast content in a mobile access network, the mobile access network comprising: at least one multicast-broadcast service zone with at least one Base Station, a Multicast-Broadcast server for each one of the multicast-broadcast service zones, the mobile access network coupled to a content distribution network, the content distribution network comprising a content server coupled to an IP multicast network, the content server being adapted for multicast and broadcast transmission, the method comprising the steps of: sending a first join request using a membership protocol for a multicast group from a Multicast-Broadcast server to the content distribution network; sending a second join request using the membership protocol and sending a first multicast IP packet from the multicast/broadcast content server to the multicast-broadcast server using a first multicast routing protocol. The method further comprises: encapsulating the first multicast IP packet into a second multicast IP packet; sending the second multicast IP packet to the local multicast group of the multicast-broadcast service zone using a second multicast routing protocol.

## Description

### Technical field

The invention relates to the transmission of multicast and broadcast content in a mobile access network, and more particularly without limitation to a method of transmitting multicast and broadcast content, and to a multicast and broadcast server.

### Background and related art

A connection between a terminal and a network element of a wireless communication network is generally established via an air interface. The air interface can for example be compliant with the IEEE 802.16 standard as a part of a protocol. The functions of a protocol can be divided into a series of layers in accordance with the open systems interconnection reference model (OSI model), starting on the air interface layer up to the application layer. One of these layers is the so called network layer.

The network layer is responsible for end to end packet delivery and provides with the functional means for transferring data sequences from a source to a destination, using one or more networks while maintaining a quality of service. The network layer performs network routing functions. The best-known protocol of this layer is the Internet Protocol (IP)

There are different types of logical connections between network elements. One of the most common is the unicast mode that sends information packets to a single destination, setting up independent connections and copying the information from end-to-end to every user that requires it. The extreme opposite is the broadcasting mode, which uses the network capabilities to send information to all destinations without congesting the network capacity, using either broadcast channels or different routing methods.

A more controlled approach is reached using the multicast mode, as it transports the packets to a group of destinations simultaneously, delivering the message over each link of the network only once and creating copies only when the links to the destinations split. All mentioned methods use in general a single transmitter to send the information to one or more users. One of the disadvantages of this type of connections in standards as IEEE 802.16 is that there is no established way of transmission of multicast-broadcast content from a content server to several base stations, leading to a congestion of the network or to a waste of network resources.

There is therefore a need for a method of transmitting multicast and broadcast content to a mobile access network, and an improved multicast-broadcast server.

### Summary of the invention

The present invention provides a method of transmitting multicast and broadcast content in a mobile access network, the mobile access network comprising: at least one multicast-broadcast service zone with at least one Base Station, a Multicast-Broadcast (MBS) server for each one of the multicast-broadcast service (MBS) zones, the mobile access network coupled to a content distribution network, the content distribution network comprising a content server coupled to an IP multicast network, the content server being adapted for multicast and broadcast transmission, the method comprising the steps of: sending a first join request using a membership protocol for a multicast group from a Multicast-Broadcast server to the content distribution network; creating a local multicast group for the multicast-broadcast service zone by sending a second join request using the membership protocol from the base station of the multicast-broadcast service zone to the multicast-broadcast server; and sending a first multicast IP packet from the multicast/broadcast content server to the multicast-broadcast server through the IP multicast network using a first multicast routing protocol.

The method further comprises: encapsulating the first multicast IP packet into a second multicast IP packet by the multicast-broadcast server; sending the second multicast IP packet to the local multicast group of the multicast-broadcast service zone using a second multicast routing protocol and receiving the second multicast IP packet by each base station of the local multicast group.

One of the advantages of the embodiments is that the MBS server is the source of traffic of the local multicast group for each MBS zone that is connected to. When an MBS server sends a multicast packet with the local multicast group as the destination, all the bases stations that have joined the group will receive the multicast packet. The multicast routing protocol that is used for the local multicast group may be different to the multicast routing protocol used for the content distribution network.

The mobile access network may belong to a different technology and a different operator from that of the content distribution network, so that the embodiment allows increasing the compatibility between the networks, without congesting the networks or the bandwidth.

The role of the MBS server is to function as a destination of the multicast content sent by the content server and as a source of the local multicast groups. The base station within an MBS zone may join the local multicast group by sending a join request to the MBS server. The MBS server functions as a source of more than one local multicast group. The MBS server may be coupled to more than one MBS zone and the base station may join more than one MBS zone.

In accordance with an embodiment of the invention the membership protocol is Internet Group Management Protocol.

In accordance with an embodiment of the invention the local multicast group is defined by assigning a local multicast group address and the second multicast IP packet further comprises a local multicast group address. The use of the local multicast groups allows using a destination address that will reach all base station subscribed to the local multicast group, without duplicating each multicast IP packet for each base station. The local multicast group is created by assigning a specific local multicast group address to the local multicast group, that is known to the MBS server and to the base stations. The base station use the local multicast group address to join the local multicast group.

In accordance with an embodiment of the invention the multicast routing protocol can be one of the following: Protocol Independent Multicast-Sparse Mode or Distance Vector Multicast Routing Protocol or Multicast Open Shortest Path First or Protocol Independent Multicast-Dense Mode or Protocol Independent Multicast-Source Specific Multicast. Other multicast protocols, including non standard protocols, may be used as well.

The method in accordance with the invention is particularly advantageous as by allowing the used of different multicast routing protocols for both networks: the mobile access network and the content distribution network. The content server send the first multicast packet over the content distribution network using a multicast routing protocol and the MBS Server receives the first multicast packet and encapsulates it and sends it over the mobile access network using another multicast routing protocol. The same multicast routing protocol may be used for both networks as well.

In accordance with an embodiment of the invention the first join request further comprises a multicast group destination address and the second join request further comprises a local multicast group address.

In another aspect, the invention relates to a computer program product stored on a computer usable medium, comprising computer readable program means for causing a computer to perform a method according to any of the embodiments of the invention when the program is run on the computer.

In another aspect the invention relates to a Multicast-Broadcast server in a mobile access network for transmitting multicast and broadcast content to a multicast-broadcast service zone, the mobile access network further comprising: at least one multicast-broadcast service zone with at least one Base Station, the mobile access network coupled to a content distribution network, the content distribution network comprising a multicast/broadcast content server coupled to an IP multicast network, the Multicast-Broadcast server comprising: means for sending a first join request using a membership protocol for a multicast group from a Multicast-Broadcast server to the content distribution network; means for receiving a second join request using the membership protocol for creating a local multicast group from the Base Station of the multicast-broadcast service zone; and means for receiving a multicast IP packet from the multicast/broadcast content server to the multicast-broadcast server through the IP multicast network using a first multicast routing protocol.

The method further comprises: means for encapsulating the first multicast IP packet into a second multicast IP packet by the multicast-broadcast server and means for sending the second multicast IP packet to the local multicast group of the multicast-broadcast service zone using a second multicast routing protocol.

In accordance with an embodiment of the invention in the Multicast-Broadcast server the membership protocol is Internet Group Management Protocol. The multicast routing protocol is Protocol Independent Multicast-Sparse Mode or Distance Vector Multicast Routing Protocol.

In accordance with an embodiment of the invention in the Multicast-Broadcast server the first join request further comprises a multicast group destination address and the second join request further comprises a local multicast group address. The second multicast IP packet further comprises a local multicast group address.

### Brief description of the drawings

In the following preferred embodiments of the invention are described in greater detail by way of example only making reference to the drawings in which:
- Figure 1: is a block diagram of the transmission of multicast and broadcast content in accordance with a first preferred embodiment of the invention,
- Figure 2: is a block diagram illustrating a second preferred embodiment of a method of the invention,
- Figure 3: is a block diagram of a further preferred embodiment of an encapsulated multicast packet.
- Figure 4: is a block diagram of a further preferred embodiment of a multicast broadcast server.

### Detailed description

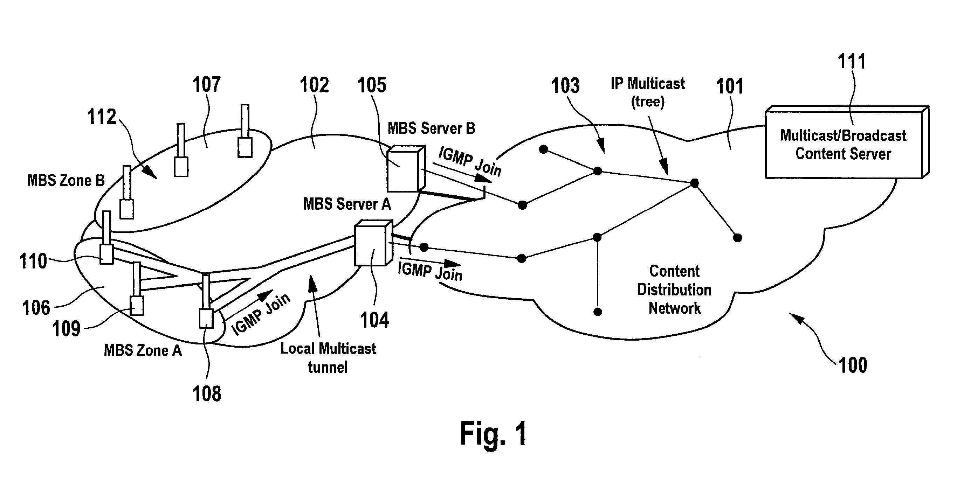

Fig. 1 shows a block diagram 100 of a transmission of a multicast and broadcast content from a content distribution network 101 to a mobile access network 102. The content distribution network 101 further comprises an IP multicast distribution tree 103 and a multicast/broadcast content server 111. The mobile access network 102 further comprises a multicast-broadcast (MBS) server A 104, an MBS server B 105, an MBS zone A 106, an MBS zone B 107, a first base station 108, a second base station 109, a third base station 110 and a plurality of base stations 111 located within the MBS zone B 107.

If a multicast and broadcast server, for example the MBS server A 104, requires to initiate a transmission of broadcast and multicast content, the MBS server requires first sending a join request using a membership protocol, as the internet group management protocol (IGMP), for joining a multicast group to the content distribution network. The multicast group is related to the content that the MBS server wants to transmit to the MBS zone that it is coupled to. The MBS server requires sending a join request for every multicast group that it want to access, that is for each multimedia content, as e.g. TV channels or videos, that it wants to forward to the plurality of base stations within the MBS zone. In a second step, each one of the base stations that form an MBS zone, as for example the base stations 108-110 within the MBS zone A 106, sends a second join request to the MBS server A 104 in order to create a local multicast group, using the same membership protocol that the MBS server has used previously. The local multicast group allows the plurality of base stations within an MBS zone to receive the content taking advantage of a multicast transmission, saving resources and bandwidth within the mobile access network.

In the third step, the multicast/broadcast content server 111 sends the first multicast IP packet corresponding to the multicast group the MBS server has previously accessed to the multicast group. The multicast IP packet is sent through the IP multicast distribution tree 103 using a first multicast routing protocol, as e.g. the Protocol Independent Multicast-Sparse Mode or the Distance Vector Multicast Routing Protocol. When the content or the multicast IP packet arrives to the MBS server, the MBS server encapsulates the packet into a second multicast IP packet and uses as a destination address the address of the local multicast group corresponding to the MBS zone that the MBS server is coupled to. The MBS server sends the second multicast IP packet and each base station that has joined the local multicast group will receive it.

The creation of local multicast groups and the location of the MBS servers at the entrance or the connection of the mobile access network 102 with the content distribution network 101 allows a flexible transmission of multicast and broadcast content, as the multicast IP packet within the content distribution network 101 can be sent using a first multicast routing, whereas in the mobile access network 102, the encapsulated multicast IP packet may use a second or a different multicast routing protocol as the one used on the content distribution network 101. This allows both taking advantage of the multicast capabilities of the networks and allowing the possibility of coupling networks with different technologies. The MBS server may be able to manage and have access to more than one MBS Zone.

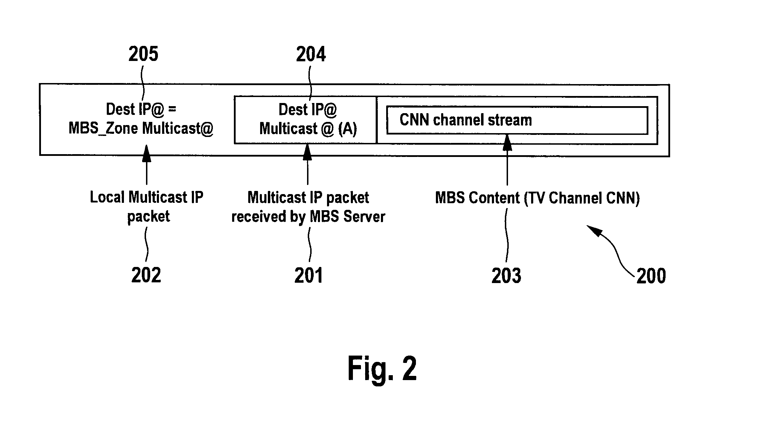

Fig. 2 shows a block diagram of an encapsulated multicast IP packet 200 comprising a first multicast IP packet 201 and a second encapsulated multicast IP packet 202. The first multicast IP packet 201 corresponds to the packet that is sent by the multicast/broadcast content server 111 and further comprises the multicast/broadcast content 203 and the destination IP address 204. The encapsulated multicast IP packet further comprises the station IP address 205.

The multicast/broadcast content 203 may correspond for example to a video stream of a TV channel, as for example CNN; the destination IP address 204 of the first multicast IP packet 201 corresponds to the address of the MBS server that has requested access to the multicast group of the MBS content 203. The destination address of the encapsulated multicast IP packet 202 corresponds to the address of the local multicast IP packet that has been created by the plurality of base stations of a specific MBS zone. The advantage of the encapsulation is that allows transmitting the multicast IP packet through a network using a different protocol, so that a maximum compatibility is reached between different networks, and using the multicast capabilities of both networks.

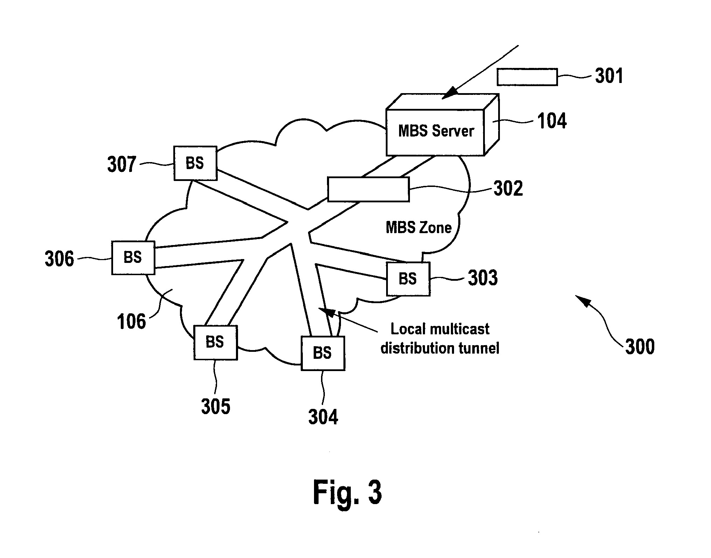

Fig. 3 shows a mobile access network 106 that further comprises the MBS server 104 and the plurality of base stations 303-307. When the MBS server 104 receives a first multicast IP packet 301, the packet is encapsulated into a second multicast IP packet 302 with the destination address of the local multicast group. When the packet is sent through the mobile access network 106, all the base stations that have joined the local multicast group will receive the multicast IP packet. After the local multicast group has been created, and when the MBS server sends the multicast IP packet, the local multicast distribution tunnels allow taking advantage of a multicast transmission, so that the MBS server requires sending only one packet to the network, and there is no need that the MBS server duplicates the packet for each base station. The local multicast distribution tunnel is created and creates copies only when the links to the destinations split.

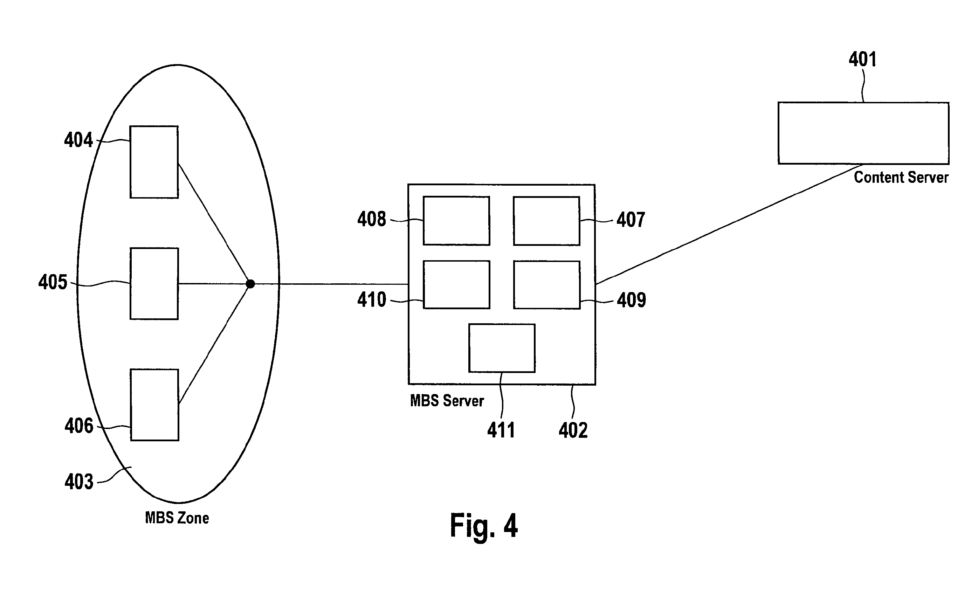

Fig. 4 shows a block diagram of the network elements that form a multicast and broadcast transmission 400. The block diagram 400 comprises a content server 401, an MBS server 402 and an MBS zone 403. The MBS zone 403 further comprises the base stations 404-406. The MBS server 402 further comprises the means for sending the first join request 407, the means for receiving a second join request 408, the means for receiving first a multicast IP packet 409, the means for encapsulating the first multicast IP packet 410 and the means for sending the encapsulated multicast IP packet 411.

When sending a first join request by the means of 407, the MBS server 402 uses a membership protocol for joining a multicast group of the content server. The means for receiving the second joint request 408 is used for creating a local multicast group for all the base stations within a multicast broadcast service zone. When a multicast IP packet is sent to the station address of the local multicast group, all the base stations receive the same multicast IP packet. When the means for receiving a first multicast IP packet 409 receive the packet, the transmission uses a first multicast routing protocol. After the means for encapsulating 410 encapsulates the packet into a second multicast packet, the means for sending 411 send the second multicast IP packet using as address the address of the local multicast group. The transmission of the second multicast IP packet uses a second multicast routing protocol and it reaches all the base stations that have previously joined the local multicast group.

### List of reference numerals

| | |
|---|---|
| 100 | Block diagram |
| 101 | Content distribution network |
| 102 | Mobile access network |
| 103 | IP multicast tree |
| 104 | MBS server A |
| 105 | MBS server B |
| 106 | MBS zone A |
| 107 | MBS zone B |
| 108 | First base station |
| 109 | Second base station |
| 110 | Third base station |
| 111 | Content server |
| 112 | Plurality of base station |
| 200 | Block diagram |
| 201 | First multicast packet |
| 202 | Second multicast packet |
| 203 | MBS content |
| 204 | MBS server address |
| 205 | Local multicast group address |
| 300 | Block diagram |
| 301 | First multicast packet |
| 302 | Encapsulated multicast packet |
| 303 | Base station |
| 304 | Base station |
| 305 | Base station |
| 306 | Base station |
| 307 | Base station |
| 400 | Block diagram |
| 401 | Content server |
| 402 | MBS server |
| 403 | MBS zone |
| 404 | Base station |
| 405 | Base station |
| 406 | Base station |
| 407 | Means for sending |
| 408 | Means for receiving |
| 409 | Means for receiving |
| 410 | Means for encapsulating |
| 411 | Means for sending |

## Claims

1. A method of transmitting multicast and broadcast content in a mobile access network (102), said mobile access network (102) comprising: at least one multicast-broadcast service zone (106-107) with at least one base station (108-110), a multicast-broadcast server (104-105) for each one of said multicast-broadcast service zones (106-107), said mobile access network (102) coupled to a content distribution network (101), said content distribution network (101) comprising a content server (111) coupled to an IP multicast network, said content server (111) being adapted for multicast and broadcast transmission, said method comprising the steps of:
- sending a first join request using a membership protocol for a multicast group from a multicast-broadcast server (104-105) to said content distribution network (101);
- sending a second join request using said membership protocol from said base station (108-110) of said multicast-broadcast service zone (106-107) to said multicast-broadcast server (104-105);
- sending a first multicast IP packet (201) from said multicast/broadcast content server (111) to said multicast-broadcast server (104-105) through said IP multicast network using a first multicast routing protocol;
- encapsulating said first multicast IP packet (201) into a second multicast IP packet (202) by said multicast-broadcast server;
- sending said second multicast IP packet (202) to said local multicast group of said multicast-broadcast service zone (106-107) using a second multicast routing protocol.
- receiving said second multicast IP packet (202) by each base station (108-110) of said local multicast group.

2. The method as in claim 1, wherein said membership protocol is Internet Group Management Protocol.

3. The method as in claim 1, wherein said local multicast group is defined by assigning a local multicast group address, wherein said second multicast IP packet (202) further comprises a local multicast group address.

4. The method as in claim 3, wherein said first join request further comprises a multicast group destination address and said second join request further comprises a local multicast group address.

5. The method as in claim 1, wherein said multicast routing protocol is Protocol Independent Multicast-Sparse Mode or Distance Vector Multicast Routing Protocol or Multicast Open Shortest Path First or Protocol Independent Multicast-Dense Mode or Protocol Independent Multicast-Source Specific Multicast.

6. A computer program product stored on a computer usable medium, comprising computer readable program means for causing a computer to perform a method according to any of the preceding claims 1 to 5 when said program is run on said computer.

7. A multicast-broadcast server (104-105) in a mobile access network (102) for transmitting multicast and broadcast content to a multicast-broadcast service zone (106-107) , said mobile access network (102) further comprising: at least one multicast-broadcast service zone (106-107) with at least one Base Station, said mobile access network (102) coupled to a content distribution network (101), said content distribution network (101) comprising a multicast/broadcast content server (111) coupled to an IP multicast network, said multicast-broadcast server (104-105) comprising:
- means for sending (407) a first join request using a membership protocol for a multicast group to said content distribution network (101);
- means for receiving (408) a second join request using said membership protocol for creating a local multicast group from said Base station (108-110)of said multicast-broadcast service zone (106-107) ;
- means for receiving (408) a multicast IP packet from said multicast/broadcast content server (111) to said multicast-broadcast server through said IP multicast network using a first multicast routing protocol;
- means for encapsulating (409) said first multicast IP packet (201 )into a second multicast IP packet (202) by said multicast-broadcast server;
- means for sending (407) said second multicast IP packet (202) to said local multicast group of said multicast-broadcast service zone (106-107) using a second multicast routing protocol.

8. The multicast-broadcast server (104-105) as in claim 7, wherein said membership protocol is Internet Group Management Protocol.

9. The multicast-broadcast server (104-105) as in claim 7, wherein said multicast routing protocol is Protocol Independent Multicast-Sparse Mode or Distance Vector Multicast Routing Protocol or Multicast Open Shortest Path First or Protocol Independent Multicast-Dense Mode or Protocol Independent Multicast-Source Specific Multicast.

10. The multicast-broadcast server (104-105) as in claim 7, wherein said local multicast group is defined by assigning a local multicast group address, wherein said second multicast IP packet (202) further comprises a local multicast group address.

11. The multicast-broadcast server (104-105) as in claim 10, wherein said first join request further comprises a multicast group destination address and said second join request further comprises said local multicast group address.
